# EUROPEAN PATENT SPECIFICATION

(11) **EP 2 784 952 B1**
(45) Date of publication and mention of the grant of the patent: **23.03.2016**
(21) Application number: 14161795.1
(22) Date of filing: 26.03.2014
(51) Int. Cl.: H04B 17/00

(54) **A method and system for signal measurement and approval over controlled environment**
Verfahren und System zur Signalmessung und Freigabe über eine kontrollierte Umgebung
Procédé et système permettant la mesure de signaux et d'approbation sur environnement contrôlé

(30) Priority: 26.03.2013 TR 201303635
(43) Date of publication of application: 01.10.2014
(73) Proprietor: KREA ICERIK HIZMETLERI VE PRODUKSIYON ANONIM SIRKETI, 34353 Istanbul (TR)
(72) Inventor: Sevindik, Erol, 34353 Istanbul (TR); Özdemir, Ersoy, 34353 Istanbul (TR)
(74) Representative: Kaya, Erdem

(56) References cited:
- US-A1- 2005 235 325
- US-A1- 2012 217 293
- US-B1- 6 216 266

## Description

### Technical Field

The present invention relates to a method and system for signal measurement and approval over controlled environment that will minimize the problems encountered after the faulty service and thus that will increase subscriber satisfaction thanks to the antenna installation and signal measurement operations being carried out by the controlled environment upon approval thereof.

### Prior Art

Satellite broadcasts can be viewed by means of a dish antenna, a satellite receiver (set top box) and a screen. Antennas are devices collecting the electromagnetic waves emitted in free space, enabling these waves to be emitted through the transmission lines (receiver antennas) or emitting the waves from transmission lines to the space (transmitter antennas). They are shaped, sized and generally named according to the wavelength. All long or short range access systems such as radio and TV broadcasts, GSM, wireless networks, wireless announcement systems, radios, radars, bluetooth devices are provided with an antenna system.

Various instruments and devices that can be used for setting the antennas to the desired satellite positions are available. Since satellite signals are extremely low level signals, dishes cannot receive these signals on their own. To receive these signals, transmitter and receiver dishes should be facing each other. A compass and a tilt meter are used to mechanically set position of the dish such that desired satellite is faced. To do this, firstly, based on the current location, satellite's azimuth angle (local angle) and elevation angle (takeoff angle) information as well as polarization angles should be known. According to this information, azimuth angle (local angle) is set by the compass and elevation angle (takeoff angle) is set by the tilt meter. Special instruments manufactured to precisely and easily perform each setting together are also available.

After the dish antenna is mechanically pointed to the satellite, a receiver (electronic unit) referred to as LNB (Low Noise Block Converter), first meeting the satellite input signal, amplifying the received signals and lowering these high frequency satellite signals to low frequency ones by performing a frequency conversion is placed in the middle of the dish antenna and incoming signal is measured. Instruments specifically manufactured for this signal measurement are available. With these instruments, azimuth, elevation and polarization settings can be set so as to display the highest signal value. More sophisticated devices enable precise measurement of the TV, radio, data signals to be received according to the characteristics thereof and enable determination of strength, noise, interference status thereof. In any case, azimuth, elevation and polarization settings are carried out so as to maximize the level of received signal. Finally, the distance between the LNB and dish (focal length) is also measured and antenna installation is completed after checking that the LNB is exactly in the center and at the focal length so as to provide the maximum signal level.

The satellite signal quality obtained during the installation is the most important factor directly affecting the broadcast quality offered to the subscribers. When technical service employees perform installation on the roof, they carry out measurements by attaching the signal measurement devices available in the market to the antenna cable. They perform this operation on a single transponder and complete the installation once they consider that the appropriate signal is attained. However, since a measurement is not performed for different transponders and signal quality evaluation is at the discretion of the technical service employees, often, desired broadcast quality and number of channels cannot be attained during the installation. The same situation is also valid for the case of failures in which set top box of the subscriber is replaced with a new one without checking the satellite signal quality and unnecessary costs are incurred.

Since installations are typically carried out on the roof, some problems in terms of occupational safety are also experienced. Signal measurement devices used during the installation on the roof are very large in size and difficulties are encountered in the utilization thereof. Works to be performed for providing the signal measurement handheld terminals that must be carried by the technical service teams with an easily portable size, with an easily usable interface and for shortening the duration of installations carried out on the roof constitute an example for the occupational safety measures to be taken.

In addition to this, another broadcast problem is encountered due to bad weather conditions. Numerous complaints are received from the subscribers since there is no system reporting to a central unit by performing measurements on its own and creating an alarm by measuring the quality of service offered by the technical services. During the search performed on the subject matter, it is found that there is no system capable of providing solutions to these common problems of the industry. Therefore, the problem is intended to be solved by means of a system improving the service quality and after the satellite signals are automatically measured thanks to the apparatus disposed inside the system, automatic reporting to the center when the signal quality decreases due to bad weather conditions, faulty installation, etc. is also aimed.

In the current state of the art, to perform the antenna installation, location to be provided therewith is reached together with signal measurement devices and the satellite signals reaching to the dish are measured by connecting the measurement devices to the electronic units of dish antennas referred to as low noise block converters. Installation and setup of the dish antennas are carried out according to the measured signal data. Measured signal data are kept hidden by the users performing the installation as they are only viewed by them. During the antenna installation, although a better signal can be obtained at different positions of the location where the installation is carried out, this decision is at the discretion of the user and often the idea of finishing the job as soon as possible leads to completion of the installation with low signal levels and creation of a workload again upon subsequent complaints received from the subscribers.

In the international patent document No. WO2013023535 , a method and device for calibrating antenna is disclosed. To allow the terminal device used in the antenna calibration to perform the function thereof, a base station transmits a calibration pilot frequency to the terminal device. Antenna calibration is performed thanks to this pilot frequency value, channel measurement and information feedback are obtained. Information feedback is only for antenna calibration and channel measurement, wherein the signal values obtained according to the pilot frequency value taken into account during the antenna calibration are not analyzed and controlled by a central unit.

US2012217293 discloses an embodiment that may take the form of a system or method for generating one or more matrix codes that may then be obtained by a reader device, the one or more matrix codes including information that may be utilized to aid in the installation and configuration of one or more components of a distribution system. In one embodiment, the one or more matrix codes may be utilized by the system to configure one or more aspects and features of a component of the system, such as a receiver or display device. In another embodiment, the one or matrix codes may provide system information to a provider or an installer to verify proper installation of one or more components. The information encoded in the matrix codes may include any type of information about one or more components of the distribution system to aid the system or an installer in configuring or installing components of the system.

US2005235325 discloses a method for validating antenna installation to a broadcast provider to ensure proper alignment of the antenna with the broadcast provider's satellite system. The feedback provided by the customer, the installer, and signal strength and quality information communicated from the receiver to the broadcast provider are used to confirm proper installation. Upon confirmation of proper installation, the data can be used to troubleshoot equipment, or issue payment to the installer.

US6216266 discloses a method and apparatus for adjusting an antenna to maximize the strength of a program information signal. One of the embodiment of the apparatus includes a remote control comprising a user input interface, for accepting at least one user input command and for translating the user input command into at least one command signal; a remote control receiver, for receiving a first signal from a controlled device, wherein the first signal is indicative of a measured quality of a second signal received by the controlled device; a remote control processor, communicatively coupled to the user input interface and the remote control receiver, for processing the received first signals, and for generating coded signals according to the command signal; a remote control transmitter, communicatively coupled to the remote control processor, for transmitting the coded signals to the controlled device to execute the user command; and a user output interface communicatively coupled to the remote control processor, for presenting the processed received signals.

In conclusion, the need for a method for signal measurement and approval over controlled environment eliminating the disadvantages mentioned above, increasing the subscriber satisfaction by minimizing the problems encountered after faulty installation and insufficiency of the solutions in the current state of the art have made the development in the respective technical field necessary.

### Brief Description of the Invention

The present invention is developed by being inspired from the existing situations and seeks to solve the above mentioned drawbacks.

The object of the present invention is to reduce the broadcast quality problem encountered by the subscribers due to faulty antenna installations performed by the users (technical service teams) and to increase the subscriber satisfaction by forcing the users to perform the installation at a location with higher signal levels where signal levels are not sufficient.

The object of the present invention is to carry out monitoring the installation and troubleshooting approvals over controlled environment without leaving them to the discretion of the user by automation thereof.

Another object of the present invention is to avoid new equipment replacement carried out unnecessarily and leading to a heavy financial burden due to lack of identifying the subscriber complaints as originating from signal quality.

Another object of the present invention is to prevent problems such as incomplete channel pick up thanks to the measurement and verification of the signal quality not only on one transponder but on all the transponders during the antenna installation.

Another object of the present invention is to take measures in terms of occupational safety by shortening duration of the installations realized by the users (technical service teams) on the roof and by reducing their workload.

Another object of the present invention is to enable the broadcaster to measure signal quality at any time according to the needs thereof thanks to the controlled environment to be created and to enable immediate interventions by creating alarm mechanisms related with the failures.

Another object of the present invention is also to indirectly reduce workload in the call centers by improving the troubleshooting rates of the broadcast quality problems taking place due to bad weather conditions.

Another object of the present invention is to create a system increasing the satisfaction in all subscription systems where subscriber satisfaction depends on the signal values.

The structural and the characteristic features and all advantages of the present invention will be understood more clearly with the following figures and the detailed description written by referring to said figures and therefore, the evaluation needs to be done by taking said figures and detailed description into consideration.

### Figures for a Better Understanding of the Invention

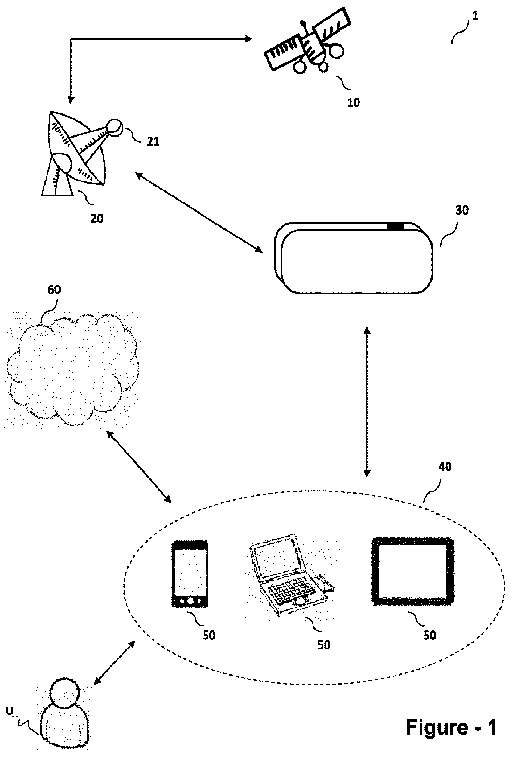

Figure 1-Schematic block diagram of the system for signal measurement and approval over controlled environment
Figure 2-Flow diagram of the method for signal measurement and approval over controlled environment

The parts in the figures are numbered, wherein the parts corresponding to these numbers are provided below.

### Description of the References

1. : System for signal measurement and approval over controlled environment
10. : Satellite
20. : Dish antenna
21. : Low noise block converter (LNB)
30. : Signal measurement apparatus
40. : Transmission medium
50. : Mobile terminal
60. : Controlled environment (DBS)
1000. : Method for signal measurement and approval over controlled environment
1001. : Measuring the signal by the user with the signal measurement apparatus
1002. : Converting the signal values measured by the signal measurement apparatus to the digital values
1003. : Transferring the measurement data converted to digital values by the signal measurement apparatus to the mobile terminal
1004. : Displaying the digital measurement data by the mobile terminal
1005. : Transmitting the digital measurement data by the mobile terminal to the controlled environment over the transmission medium
1006. : Analyzing the digital measurement data by the controlled environment according to certain parameters
1007. : Making the query of whether or not the signal level of the subscriber is sufficient
1008. : Granting of operation approval by the controlled environment to the user
1009. : Warning of the user for increasing the signal values
Y=Yes
N = No
U = User
LNB = (Low Noise Block Converter)

### Detailed Description of the Invention

The system (1) for signal measurement and approval over controlled environment enabling measurement of the signals from the satellite (10) and analysis of the measured signal values during the realization of the service provided to the subscriber by the user (U) comprises the following:
at least one satellite (10) sending the signals received from the earth back to the earth so as to cover a wider area;
at least one dish antenna (20) enabling the signals transmitted from the satellite (10) to be received;
at least one low noise block converter (21) located in the middle of the dish antennas (20) and first meeting the satellite (10) input signal;
at least one signal measurement apparatus (30) measuring the incoming signals and enabling the azimuth, elevation and polarization settings to be performed according to the measurement values;
at least one transmission medium (40) enabling the communication between the mobile terminal (50) and controlled environment (60) to be realized;
at least one mobile terminal (50) enabling the signal measurement apparatus (30) to be commanded and transferring the signal values measured by the signal measurement apparatus (30) to the controlled environment (60) for approval; and
at least one controlled environment (60) deciding whether or not to grant approval to the signal values by comparing the signal values measured by the signal measurement apparatus (30) to the reference values set according to the current location or warning the user (U) for obtaining higher signal values by performing the installation according to different settings.

In the system (1) according to the present invention, the user (U) initially makes a discovery of the location where dish antenna (20) installation will be carried out. To view the broadcasts without problems, dish antenna (20) should be focused to the satellite (10) and positioned so as to best receive the satellite (10) signals. Therefore, installation should be carried out by users (U) with sufficient technical knowledge and equipment. After location determination is performed, at the appropriate point, dish antenna (20) is moved in the azimuth (horizontal) and elevation (vertical) directions, highest signal level in those directions is followed and setting of the dish antenna (20) is completed. When this setting is performed, the level of a weak broadcast signal of the satellite (10) is taken into account. Thus, dish antenna (20) is properly directed to the satellite (10). Measured signal level is checked by means of a signal measurement apparatus (30) connected to the low noise block converter (21) located in the middle of the dish antenna (20). Polarity (polarization) setting is carried out by rotating the low noise block converter (21) clockwise or counterclockwise with the dish antenna (20) remaining fixed and the point with maximum signal level is determined.

The signal measurement apparatus (30) used in the system (1) according to the present invention has an easily portable size allowing the users (U) performing the installation to carry it thereon. It converts the signal values measured from the cable to digital data that can be displayed by the mobile terminal (50) thanks to the operating system and software installed therein and transmits these data to the mobile terminal (50) by means of platforms such as bluetooth, wi-fi (wireless fidelity), usb (universal serial bus), firewire, etc. Mobile terminals (50) such as mobile phones, smartphones, laptop computers, tablets, pocket computers, etc. enabling the users (U) transmitting the signal levels measured by the signal measurement apparatus (30) to the controlled environment (60) after completion of the antenna installation for approval and for performing operations on behalf of the subscribers are provided with the feature of Internet connectivity. Users (U) transmit the digital measurement data received by the mobile terminals (50) to the controlled environment (60) by means of the transmission medium (40) consisting of platforms such as an Internet network, GPRS enabled phones/GSM networks, etc.

Controlled environment (60) analyzes the digital measurement data received thereby according to certain parameters for granting operation and signal approval to the user (U) and at the end of this analysis decides whether or not to grant approval for the operation. During this decision, variables such as the following are evaluated: information of the user (U) to perform the operation, subscriber information stating the person to be provided with the operation, operation information stating the type of operation, signal information for receiving broadcasts without problems, location information of the subscriber to be provided with the operation, weather information of that location, etc. While performing this evaluation, reference signal levels to be received in the serviced location are predetermined according to these variables and controlled environment (60) automatically decides whether or not to grant approval to the signal value based on these values.

If the signal value transmitted by the user (U) to the controlled environment (60) is below the reference values, the user (U) is warned to increase the signal value and asked to perform the installation at a point where a higher signal value can be attained.

The method for signal measurement and approval over controlled environment (1000) according to the present invention enabling measurement of the signals from the satellite (10) and analysis of the measured signal values during the realization of the service provided to the subscriber by the user (U) comprises the following process steps:
measuring the signal by the user (U) with the signal measurement apparatus (30) (1001);
converting the signal values measured by the signal measurement apparatus (30) to the digital values (1002);
transferring the measurement data converted to digital values by the signal measurement apparatus (30) to the mobile terminal (50) (1003);
displaying the digital measurement data by the mobile terminal (50) (1004); transmitting the digital measurement data provided in the mobile terminal (50) by the user (U) to the controlled environment (60) over the transmission medium (40) (1005);
analyzing the digital measurement data by the controlled environment (60) according to certain parameters (1006);
making the query of whether or not the signal level of the subscriber is sufficient (1007);
granting approval by the controlled environment (60) to the user (U) (1008); and
warning the user (U) for increasing the signal level (1009).

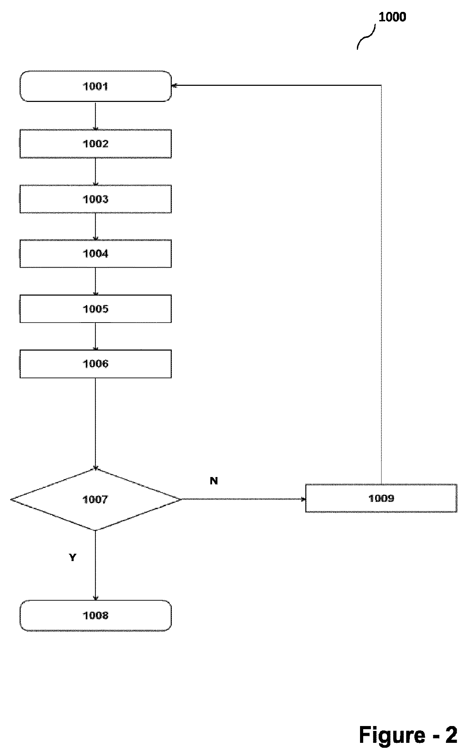

As mentioned in Figure 2 and in the aforementioned process steps, after making the query of whether or not the signal level of the subscriber is sufficient (1007), if the response is "Yes" (Y), then, the step of granting approval by the controlled environment (60) to the user (U) (1008) is employed. After making the query of whether or not the signal level of the subscriber is sufficient (1007), if the response is "No" (N), then, the process step of warning the user (U) for increasing the signal level (1009) is employed.

Around these basic concepts, development of a wide variety of applications of the method and system for signal measurement and approval over controlled environment according to the present invention is possible, wherein the present invention cannot be limited to the examples described herein and it is as disclosed in following the claims.

## Claims

1. A method (1000) of a system (1) for signal measurement and approval over a controlled environment comprising the step of measurement of the signals received from a satellite (10) during performing the service offered to a subscriber by a user (U), said method comprising the following process steps:
- measuring the signal by the user (U) with a signal measurement apparatus (30) (1001);
- converting the signal values measured by said signal measurement apparatus (30) to digital values (1002);
and **characterized by** comprising the process steps of:
- transmitting the measurement data converted to digital values by the signal measurement apparatus (30) to a mobile terminal (50) by means of platforms such as bluetooth, wireless fidelity "wifi", universal serial bus "USB" or firewire (1003);
- displaying the digital measurement data to said user (U) by said mobile terminal (50) (1004);
- transmitting the digital measurement data by the mobile terminal (50) to said controlled environment (60) over a transmission medium (40) (1005);
- analyzing the digital measurement data by the controlled environment (60) by deciding
whether or not to grant approval to the signal values by comparing the signal values measured by the signal measurement apparatus (30) to reference values set according to a current location.

2. Process step according to Claim 1, **characterized in that** in the step of measuring the signal by the user (U) with the signal measurement apparatus (30) (1001), the measured signals are television signals received from the satellite (10).

3. Process step according to Claim 1, **characterized in that** in the step of making the query of whether or not the signal level of the subscriber is sufficient (1007), if the signal level is below the reference values, the user (U) is warned for increasing the signal level (1009).

4. Process step according to Claim 1, **characterized in that** in the step of analyzing the digital measurement data by the controlled environment (60) according to certain parameters (1006), said parameters comprise at least one signal data.

5. Process step according to Claim 1, **characterized in that** in the step of analyzing the digital measurement data by the controlled environment (60) according to certain parameters (1006), said parameters comprise at least one subscriber demographic data.

6. Process step according to Claim 1, **characterized in that** in the step of analyzing the digital measurement data by the controlled environment (60) according to certain parameters (1006), said parameters comprise at least one location data.

7. Process step according to Claim 1, **characterized in that** in the step of analyzing the digital measurement data by the controlled environment (60) according to certain parameters (1006), said parameters comprise at least one weather data.

8. A system (1) for signal measurement and approval over controlled environment enabling measurement of signals from a satellite (10) and analysis of the measured signal values during the realization of the service provided to a subscriber by a user (U), said system having at least one satellite (10) sending the signals received from the earth back to the earth so as to cover a wider area; at least one dish antenna (20) enabling the signals transmitted from the satellite (10) to be received; at least one low noise block converter (21) located in the middle of dish antennas (20) and first meeting the satellite (10) input signal and said system, at least one signal measurement apparatus (30) connected to said low noise block converter (21), at least one transmission medium (40) enabling the communication between the mobile terminal (50) and the controlled environment (60) to be realized; at least one controlled environment (60) deciding whether or not to grant approval to the signal values by comparing the signal values measured by the signal measurement apparatus (30) to reference values
**characterized in** comprising the following:
- said signal measurement apparatus (30) converting the signal values measured to digital data that can be displayed by a mobile terminal (50) and transmitting these data to said mobile terminal (50) by means of platforms such as bluetooth, wireles fidelity "wi-fi", universal serial bus "USB" or firewire,
- said mobile terminal (50) enabling the signal measurement apparatus (30) to be commanded and transferring the signal values measured by the signal measurement apparatus (30) to the controlled environment (60) for approval,wherein the reference values are set according to a current location.

9. The system (1) according to Claim 8, **characterized in** comprising a mobile terminal (50) provided with the feature of Internet connectivity.

10. The system (1) according to Claim 8, **characterized in** comprising a transmission medium (40) comprising an Internet network for the connection of the mobile terminal (50).

11. The system (1) according to Claim 8, **characterized in** comprising a transmission medium (40) comprising a GPRS enabled phone/GSM network enabling the communication between the mobile terminal (50) and controlled environment (60) to be realized.

12. The system according to Claim 8, **characterized in** comprising a wireless connection enabling the data communication between the mobile terminal (50) and signal measurement apparatus (30) to be realized.

13. The system according to Claim 8, **characterized in** comprising a bluetooth connection enabling the data communication between the mobile terminal (50) and signal measurement apparatus (30) to be realized.

14. The system according to Claim 8, **characterized in** comprising an usb connection enabling the data communication between the mobile terminal (50) and signal measurement apparatus (30) to be realized.

15. The system according to Claim 8, **characterized in** comprising a firewire connection enabling the data communication between the mobile terminal (50) and signal measurement apparatus (30) to be realized.

16. The system according to Claim 8, **characterized in that** mobile terminal (50) and signal measurement apparatus (30) are controlled and commanded.

## Patentansprüche

1. Eine Methode (1000) eines Systems (1) für eine Signalmessung und eine Zulassung einer kontrollierten Umgebung umfassend den Schritt der Messung der Signale welche von einem Satelliten (10) erhalten werden, während die Leistung, die einem Bezieher von einem Nutzer (U) geboten wird, ausgeführt wird; die besagte Methode umfasst die folgenden Prozessschritte:
- die Messung des Schritts mit dem Nutzer (U) mit einem Signalmessapparat (30) (1001);
- die Konvertierung der von dem besagten Signalmessapparat (30) gemessenen Signalwerte in digitale Werte (1002);
und ist **gekennzeichnet dadurch, dass** sie die folgenden Prozessschritte umfasst:
- Übertragung der in digitale Daten konvertierten Messdaten mit dem Signalmessapparat (30) zu einem mobilen Endgerät (50) anhand von Plattformen wie Bluetooth, Wireless Fidelity "Wi-Fi", Universal Serial Bus "USB", oder Firewire (1003);
- Anzeigen der digitalen Messdaten zum genannten Nutzer (U) mit dem genannten mobilen Endgerät (50) (1004);
- Übertragung der digitalen Messdaten mit dem mobilen Endgerät (50) zu der kontrollierten Umgebung (60) über ein Übertragungsmittel (40) (1005);
- Analyse der digitalen Messdaten mit der kontrollierten Umgebung (60), indem entschieden wird, ob den Signalwerten ein Zugang gewährt werden soll, indem die Signaldaten, die mit dem Signalmessapparat (30) gemessen wurden, mit den Referenzwerten, die gemäß des gegenwärtigen Standorts bestimmt werden, verglichen werden.

2. Ein Prozessschritt nach Anspruch 1, **dadurch gekennzeichnet, dass** während des Schritts der Messung des Signals mit dem Nutzer (U), mit dem Signalmessapparat (30) (1001), die gemessenen Signale Fernsehsignale sind, die von dem Satelliten (10) erhalten werden.

3. Prozessschritt nach Anspruch 1, **dadurch gekennzeichnet, dass** der Nutzer (U) während des Schritts, in dem, falls das Signallevel unter den Referenzwerten ist, erfragt wird, ob das Signallevel des Beziehers ausreichend ist oder nicht (1007), davor gewarnt wird, das Signallevel (1009) zu erhöhen.

4. Ein Prozessschritt nach Anspruch 1, **dadurch gekennzeichnet, dass** während des Schritts der Analyse der digitalen Messdaten von der kontrollierten Umgebung (60) gemäß bestimmter Parameter (1006) der besagte Parameter mindestens einen Signalwert umfasst.

5. Ein Prozessschritt nach Anspruch 1, **dadurch gekennzeichnet, dass** während des Schritts der Analyse der digitalen Messwerte von der kontrollierten Umgebung (60) nach bestimmten Parametern (1006), die besagten Parameter mindestens einen demographischen Bezieherwert umfassen.

6. Ein Prozessschritt nach Anspruch 1, **dadurch gekennzeichnet, dass** während des Schritts der Analyse der digitalen Messwerte von der kontrollierten Umgebung (60) nach bestimmten Parametern (1006), die besagten Parameter mindestens einen Standortwert umfassen.

7. Ein Prozessschritt nach Anspruch 1, **dadurch gekennzeichnet, dass** während des Schritts der Analyse der digitalen Messdaten von der kontrollierten Umgebung (60) gemäß bestimmter Parameter (1006), die besagten Parameter mindestens einen Wetterwert umfassen.

8. Ein System (1) für eine Signalmessung und eine Zulassung zu einer kontrollierten Umgebung, welche die Messung von Signalen von einem Satelliten (10) und die Analyse der gemessenen Signalwerte während der Leistung erlauben, die von einem Nutzer (U) einem Bezieher geboten werden; das besagte System mit mindestens einem Satelliten (10) welcher die von der Erde erhaltenen Signale zurück an die Erde sendet um eine breitere Fläche abzudecken; mindestens eine Antennenschüssel (20) welche erlaubt, dass die Signale, die von dem Satelliten (10) übertragen werden, erhalten werden; mindestens einen rauscharmen Signalumsetzer (21) welcher in der Mitte der Antennenschüsseln (20) lokalisiert ist und welcher das Eingangssignal des Satelliten (10) und das besagte System als erstes trifft, mindestens ein Signalmessapparat (30), der mit dem besagten rauscharmen Signalumsetzer (21) verbunden ist, mindestens ein Übertragungsmittel (40) welches die Kommunikation zwischen dem mobilen Endgerät (50) und der kontrollierten Umgebung (60) erlaubt; mindestens eine kontrollierte Umgebung (60) welche entscheidet ob den Signalwerten ein Zugang gewährt werden soll, indem die Signaldaten, die mit dem Signalmessapparat (30) gemessen wurden, mit den Referenzwerten verglichen werden
**dadurch gekennzeichnet, dass** es Folgendes umfasst:
- den besagten Signalmessapparat (30), der die gemessenen Signalwerte in digitale Daten konvertiert, welche mit einem mobilen Endgerät (50) angezeigt werden können und der diese Daten anhand einer Plattform wie Bluetooth, Wireless Fidelity "Wi-Fi", Universal Serial Bus "USB" oder Firewire zu dem besagten mobilen Endgerät (50) überträgt,
- das besagte mobile Endgerät (50), welches erlaubt, dass der Signalmessapparat (30) angeordnet wird und die Signalwerte, welche von dem Signalmessapparat (30) gemessen werden, zur kontrollierten Umgebung (60) für den Zugang überträgt, indem die Referenzwerte gemäß des gegenwärtigen Standorts festgelegt sind.

9. Das System (1) nach Anspruch 8, **dadurch gekennzeichnet, dass** es ein mobiles Endgerät (50) umfasst, welches mit der Funktion der Internet-Konnektivität ausgestattet ist.

10. Das System (1) nach Anspruch 8, **dadurch gekennzeichnet, dass** es ein Übertragungsmittel (40) umfasst, welches ein Internetnetzwerk für die Verbindung des mobilen Endgeräts (50) umfasst.

11. Das System (1) nach Anspruch 8, **dadurch gekennzeichnet, dass** es ein Übertragungsmedium (40) umfasst, welches ein GPRS-fähiges Telefon/GSM Netzwerk umfasst, welches die Kommunikation zwischen dem mobilen Endgerät (50) und der kontrollierten Umgebung (60) erlaubt.

12. Das System nach Anspruch 8, **dadurch gekennzeichnet, dass** es eine drahtlose Verbindung umfasst, welche die Datenkommunikation zwischen dem mobilen Endgerät (50) und dem Signalmessapparat (30) erlaubt.

13. Das System nach Anspruch 8, **dadurch gekennzeichnet, dass** es eine Bluetoothverbindung umfasst, welche die Datenkommunikation zwischen dem mobilen Endgerät (50) und dem Signalmessapparat (30) erlaubt.

14. Das System nach Anspruch 8, **dadurch gekennzeichnet, dass** es eine USB-Verbindung umfasst, welche die Datenkommunikation zwischen dem mobilen Endgerät (50) und dem Signalmessapparat (30) erlaubt.

15. Das System nach Anspruch 8, **dadurch gekennzeichnet, dass** es eine Firewire-Verbindung umfasst, welche die Datenkommunikation zwischen dem mobilen Endgerät (50) und dem Signalmessapparat (30) erlaubt.

16. Das System nach Anspruch 8, **dadurch gekennzeichnet, dass** das mobile Endgerät (50) und der Signalmessapparat (30) kontrolliert und angeordnet werden.

## Revendications

1. Une méthode (1000) d'un système (1) pour une mesure de signaux et une approbation d'un environnement contrôlé qui comprend l'étape de mesure des signaux qui sont reçus d'un satellite (10) pendant la performance du service qui est offert à un souscripteur d'un utilisateur (U), ladite méthode comprenant les étapes du processus suivantes:
- la mesure du signal par l'utilisateur (U) avec un appareil de mesure de signal (30) (1001);
- la conversion des valeurs de signal mesurées par ledit appareil de mesure de signal (30) aux valeurs digitales (1002);
et **caractérisée en ce qu'**elle comprend ces étapes du processus:
- la transmission des données de mesure qui ont été converti en valeurs digitales par l'appareil de mesure de signal (30) à un terminal mobile (50) par des plate-formes comme bluetooth, wireless fidelity « wi-fi », universal serial bus « usb », ou firewire (1003);
- l'affichage des valeurs digitales de mesure audit utilisateur (U) par ledit terminale mobile (50) (1004);
- la transmission des données digitales de mesure par le terminal mobile (50) audit environnement contrôlé (60) par un moyen de transmission (40) (1005);
- l'analyse des données digitales de mesure avec l'environnement contrôlé (60) en décidant de donner d'approbation ou pas aux valeurs de signaux en comparant les valeurs de signaux mesurées par l'appareil de mesure de signal (30) avec des valeurs de référence fixées en fonction d'une position actuelle.

2. Une étape du processus selon la revendication 1, **caractérisée en ce que** pendant l'étape de la mesure du signal par l'utilisateur (U) avec l'appareil de mesure de signal (30) (1101), les signaux mesurés sont des signaux télévisuels reçus du satellite (10).

3. Une étape du processus selon la revendication 1, **caractérisée en ce que** pendant l'étape de la question de savoir si le niveau du signal du souscripteur est suffisant (1007), si le niveau du signal soit inférieur aux valeurs de référence, l'utilisateur (U) est averti pour augmenter le niveau du signal (1009).

4. Une étape du processus selon la revendication 1, **caractérisée en ce que** pendant l'étape de l'analyse des données de mesure numériques par l'environnement contrôlé (60) selon certains paramètres (1006), lesdits paramètres comprennent au moins une valeur de signal.

5. Une étape du processus selon la revendication 1, **caractérisée en ce que** pendant l'étape de l'analyse des données de mesure numériques par l'environnement contrôlé (60) selon certains paramètres (1006), lesdits paramètres comprennent au moins une valeur démographique de souscripteur.

6. Une étape du processus selon la revendication 1, **caractérisée en ce que** pendant l'étape de l'analyse des données de mesure numériques par l'environnement contrôlé (60) selon certains paramètres (1006), lesdits paramètres comprennent au moins une valeur de localisation.

7. Une étape du processus selon la revendication 1, **caractérisée en ce que** pendant l'étape de l'analyse des données de mesure numériques par l'environnement contrôlé (60) selon certains paramètres (1006), lesdits paramètres comprennent au moins une valeur météorologique.

8. Un système (1) pour une mesure de signaux et une approbation d'un environnement contrôlé autorisant la mesure des signaux d'un satellite (10) et l'analyse des valeurs de signaux mesurées pendant la réalisation du service fourni à un souscripteur par un utilisateur (U), ledit système ayant au moins le terminal mobile (50) et l'environnement contrôlé (60) à réaliser; au moins un environnement contrôlé (60) décidant de donner d'approbation ou pas aux valeurs de signaux en comparant les valeurs de signaux mesurées par l'appareil de mesure de signal (30) aux valeurs de références
**caractérisé en ce qu'**il comprend les suivants:
- ledit appareil de mesure de signal (30) convertissant les valeurs de signaux mesurées aux données numériques qui peuvent être montrées par un terminal mobile (50) et transmettant ces données audit terminal mobile (50) au moyen des plates-formes comme bluetooth, wireless fidelity « wi-fi », universal serial bus « USB » ou firewire.
- ledit terminal mobile (50) permettant l'appareil de mesure de signal (30) d'être commandé et transférant les valeurs de signaux mesurées par l'appareil de mesure de signal (30) à l'environnement contrôlé (60) pour l'approbation, dans lequel les valeurs de référence sont fixées selon une position actuelle.

9. Le système (1) selon la revendication 8, **caractérisé en ce qu'**il comprend un terminal mobile (50) fourni avec la fonction de la connectivité internet.

10. Le système (1) selon la revendication 8, **caractérisé en ce qu'**il comprend un moyen de transmission (40) comprenant un réseau internet pour la connection du terminal mobile (50).

11. Le système (1) selon la revendication 8, **caractérisé en ce qu'**il comprend un moyen de transmission (40) comprenant un téléphone équipé de GPRS/ GSM réseau permettant que la communication entre le terminal mobile (50) et l'environnement contrôlé (60) soit realisée.

12. Le système selon la revendication 8, **caractérisé en ce qu'**il comprend un réseau sans fil permettant que la communication de données entre le terminal mobile (50) et l'appareil de mesure de signal (30) soit realisée.

13. Le sytème selon la revendication 8, **caractérisé en ce qu'**il comprend une connexion bluetooth permettant que la communication de données entre le terminal mobile (50) et l'appareil de mesure de signal (30) soit realisée.

14. Le système selon la revendication 8, **caractérisé en ce qu'**il comprend une connexion USB permettant que la communication de données entre le terminal mobile (50) et l'appareil de mesure de signal (30) soit realisée.

15. Le système selon la revendication 8, **caractérisé en ce qu'**il comprend une connexion Firewire permettant que la communication de données entre le terminal mobile (50) et l'appareil de mesure de signal (30) soit realisée.

16. Le système selon la revendication 8, **caractérisé en ce que** le terminal mobile (50) et l'appareil de mesure de signal (30) sont contrôlés et commandés.
